# EUROPEAN PATENT SPECIFICATION

(11) **EP 1 766 291 B1**
(45) Date of publication and mention of the grant of the patent: **12.10.2016**
(21) Application number: 05730947.8
(22) Date of filing: 04.04.2005
(51) Int. Cl.: F23C 10/20, B01J 8/24, B01J 8/18

(54) **NOZZLE FOR A FLUIDIZING GRID OF A FLUIDIZED BED REACTOR**
DÜSE FÜR EIN GITTER EINES WIRBELSCHICHTREAKTORS
BUSE DE GRILLE DE FLUIDISATION D'UN REACTEUR A LIT FLUIDISE

(30) Priority: 02.04.2004 FI 20040485
(43) Date of publication of application: 28.03.2007
(73) Proprietor: Amec Foster Wheeler Energia Oy, 02130 Espoo (FI)
(72) Inventor: LEHTONEN, Pekka, FI-48800 Karhula (FI); MAKKONEN, Pasi, FI-02920 Espoo (FI); SOININEN, Riku, FI-79100 Leppävirta (FI)
(74) Representative: Genip Oy
(86) International application number: PCT/FI2005/000173
(87) International publication number: WO 2005/095854

(56) References cited:
- DE-A1- 2 335 514
- DE-A1- 3 015 798
- US-A- 4 748 916
- US-A- 4 779 547
- US-A- 5 118 479

## Description

The present invention relates to a grid nozzle of a fluidized bed reactor. Heat engineering uses a nozzle in accordance with the present invention preferably to bring fluidizing gas, such as combustion air, to a furnace of a fluidized bed boiler. According to a most preferred embodiment, said nozzles are also used for removing solid particles from the bottom of a fluidized bed reactor.

Chemical reactions, such as combustion or gasification, are performed in a fluidized bed material layer of fluidized bed reactors, usually so called bubbling fluidized bed or circulating fluidized bed reactors. There, fluidizing gas, for example, air, is supplied in the reactor through said bed material layer, mainly comprising sand and fuel, in such a way that the bed turns to an easily moving fluidized state.

A grid nozzle is an apparatus, by means of which the fluidizing gas is supplied to a fluidized bed reactor. According to the prior art, the grid nozzles have been vertical tubes, through the nozzle piece of which the fluidizing gas is guided to the fluidized bed reactor either as evenly distributed to all directions or as directed to a certain direction.

It is typical of the fluidized bed reactors, that oversized pieces, such as pieces of metal or stones, may enter the reactor, pieces of refractory may become loose from the reactor wall or coarse solid pieces may be generated in the reactions. Such pieces fall in the fluidized bed towards the grid at the bottom of the reactor, from where they must be removed. E.g. US patent publications 3,397,657 and 5,093,085 disclose methods of removing coarse material. According to the latter publication, the removal of solid material is performed by means of a grid arranged in an inclined position, so that the solid material is allowed to flow along the grid plate to a discharge opening in the grid and therefrom along a pit to be further treated or disposed. nozzle type of a grid nozzle comprising a mainly vertical tube extending through the grid, the upper end of which tubed is provided with a preferably substantially horizontal mouth piece, by means of which the flow of the fluidizing gas is directed substantially horizontally and guided out of the nozzle so that solid particles settling from the fluidized bed, so-called bottom ash, are carried with the flow towards the discharge opening thereof.

The problem with this kind of nozzles is the wearing of the nozzles, which relates to the strong flow of coarse material along the bottom towards a nozzle next downstream. To decrease the wearing of the nozzles, US patent 4,748,916 discloses division of a horizontal air jet into two portions, which may be directed past the next nozzle. Further, the rear portion of the nozzle is designed inclined to direct the jet hitting the nozzle upwards. Finnish patent FI 107406 discloses making the inclined part between the nozzles as a separate enduring wearing piece.

The fluidizing gas entering the nozzle is usually preheated air, possibly containing circulated flue gas. The required flow velocity is provided by means of so called primary air blowers, from which air is guided to the nozzles through a so called wind box. In a known construction the wind box is a continuous wide space, from which air is divided to the nozzles through leg tubes.The temperature of the fluidizing gas flowing through the nozzles in fluidized bed boilers is in normal use about 150 to 250 °C, although in the start up of a boiler provided with duct burners the temperature of the air to be fed may be even close to 1000°C.

In boiler plants using refuse-derived-fuel (RDF) as fuel, or part of the fuel is recycled, the wearing of the grid nozzles seems to be connected with heavy corrosion mainly occuring on the outer surface of the nozzle lid. The corrosion causes an oxide layer preventing corrosion on the surface of the nozzle material, but due to erosion the oxide layer wears off and the thickness of the material reduces fast. compounds, such as salts and metal compounds melting at a low temperature. The corrosion accelerating effect of these compounds can influence the lid of the nozzles especially when the protecting oxide layer disappears due to erosion.

When studying corrosion of the grid nozzles of a fluidized bed reactor more closely, it has been noticed that it is mainly caused by salts formed by alkalis. The main corrosives are sodium and chlorine and the salts formed by them. This was the conclusion after noticing that the corrosion is at its most in plants using fuel containing a lot of chlorine. The reactivity of the above mentioned salts increases at the temperature range of 450 to 600°C and there their tendency to cause corrosion is high. The reactivity of the salts in a melted state decreases when the temperature increases above 650°C. When studying the surface temperature of the lid of the grid nozzles in accordance with the prior art, it was noted that in typical applications, the temperature settles in normal situations exactly to the area of the strongest reactivity, whereby the chemical corrosion again is at its worst.

To solve this problem it is suggested that the temperature of the lid of the nozzles is increased in such a way that the high surface temperature of the lid leads to evaporation of salts and decrease of reactivity, whereby corrosion decreases.

This result is achieved by a grid nozzle according to claim 1.

According to the present invention, the increase of the surface temperature of the nozzle lids is carried out by making the lid two- or multilayered in such a way that the fluidizing gas blown to the fluidized bed reactor is not directly allowed to cool down the nozzle lid so that its outer surface would cool down.

Other characteristic features of a grid nozzle in accordance with the present invention become clear in the accompanying claims.

A grid nozzle in accordance with the present invention is studied more in detail, by way of example, below with reference to the accompanying drawings, in which
Fig. 1 schematically illustrates a vertical, cross-sectional view of a grid nozzle in accordance with the prior art;
Figs 2a and 2b schematically illustrate vertical cross-sectional views of grid nozzles in accordance with two preferred embodiments of the invention;
Fig. 3 schematically illustrates a vertical, cross-sectional view of a grid nozzle in accordance with a third embodiment of the invention;
Fig. 4 schematically illustrates a vertical, cross-sectional view of a grid nozzle in accordance with a fourth embodiment of the invention; and
Fig. 5 schematically illustrates a vertical, cross-sectional view of a part of a grid of a fluidized bed reactor, having grid nozzles in accordance with a preferred embodiment of the invention.

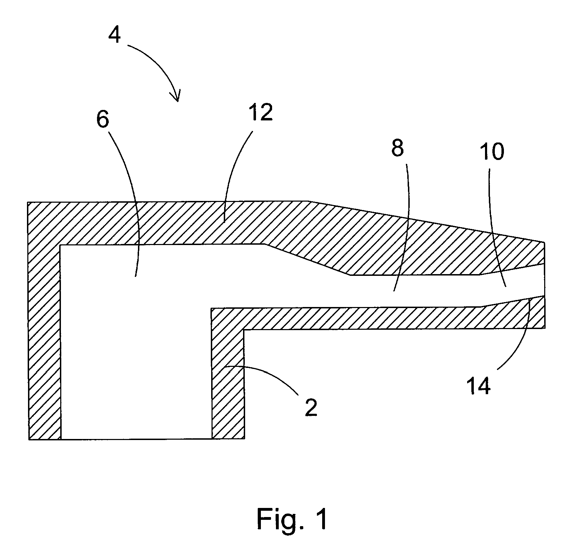

Fig. 1 illustrates a grid nozzle is a accordance with the prior art. Fluidizing gas, such as air, flows from the wind box (not shown) through a grid along a vertical nozzle tube (not shown) to a nozzle piece 4. The flow is turned substantially horizontal by means of the design of a nozzle chamber 6 of the nozzle piece 4 attached by means of a sleeve 2 to the upper end of the nozzle tube. In the embodiment illustrated in the drawing, the nozzle channel, by means of which the air flow is guided from the nozzle chamber to the fluidized bed reactor, forms of a substantially horizontal part 8 and of a slightly upwards inclined part 10. The nozzle chamber 6 as well as the different parts 8 and 10 of the nozzle channel are limited from above by a lid 12, the outer surface of which is, according to the disclosed construction, in the nozzle channel part slightly downwards inclined towards the blow opening, to which the nozzle channel ends.

The nozzle channel is limited from below by a lower lip 14, the end part of which, according to the disclosed embodiment, rises to a certain extent. The purpose of the part 10 of the nozzle channel, which is upwardly inclined, is to guide the air flow to above the next nozzle row located in front of the nozzle so that the solid stream carried with the air flow would also be guided above the next nozzle row without causing significant wearing of the lid of the nozzle. It has, however, been noted that in some conditions it is possible that the rising lower lip 14 causes a downwardly vortex at the discharge opening of the nozzle, which vortex especially guides the solids flow directly to the lids of the next row of nozzles increasing the wearing thereof.

The nozzle tubes have in most of the cases a circular cross section at the point where they pass through the grid. In the similar way the sleeve 2, by means of which the nozzle piece 4 is mounted to the nozzle tube has preferably a circular cross section. In some cases, the sleeve and the nozzle tube are one entity, in other words the nozzle tube, sometimes also called a leg tube, has originally been manufactured as an integrated part of the nozzle piece. Usually the nozzle piece, however, is attached of the sleeve 2 to the nozzle tube by welding, by a threaded coupling or in some other manner suitable for the purpose.

The lid arrangement 12 of the nozzle or the nozzle piece 4 with the lower lip 14 are from above preferably rectangular so that the blow opening of the nozzle is located on one side of the rectangle. In other words, air flow in the nozzle chamber 6 spreads to an area of at least two, preferably three times the diameter of the nozzle, sometimes even further, generating a low and wide air flow from the blow opening of the nozzle to the reactor.

The nozzle tube or the sleeve 2 may preferably be provided with a gas flow restrictor (not shown), by means of which a desired pressure difference over the nozzle 4 is achieved. The required pressure difference is determined in a known manner based on the bed pressure and the extent thereof depends on the location of the nozzle on the grid, too. The nozzles 4 are manufactured, for example, by casting and the material thereof is preferably austenitic, stainless steel applicable at high temperatures.

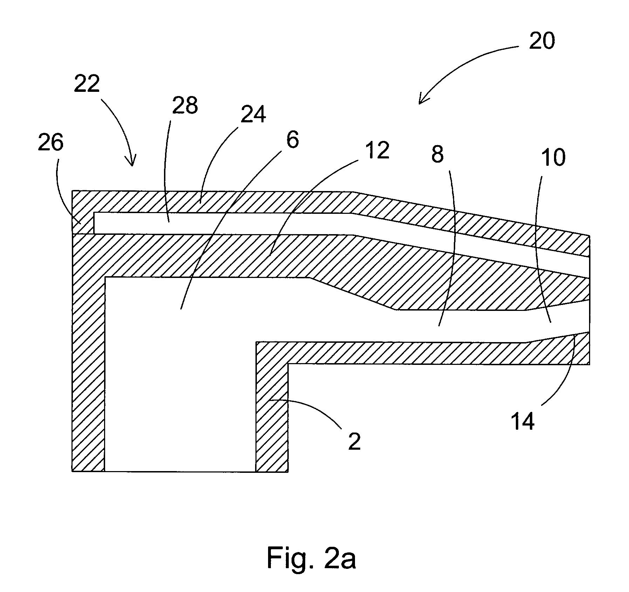

Fig. 2a discloses a nozzle arrangement in accordance with a preferred embodiment of the invention. A nozzle 20 illustrated in the drawing is similar to the one illustrated in Fig. 1 except for the upper part of the nozzle piece, which in the embodiment of Fig. 2a comprises, in addition to a lid 12 in accordance with Fig. 1, also an outer protecting cover 22, comprising a cover plate 24 and narrow rib-like parts 26 at least at the periphery of the cover plate 24 supporting against the surface of the nozzle piece, in this embodiment, the lid 12. The advantageousness of a two-piece lid construction is based on the temperature increase of the protecting cover 22, i.e. the part of the nozzle subject to wearing, due to the construction. Thereby the compounds melting at a low temperature evaporate from the lid of the nozzle without an accelerating effect on corrosion.

A two-piece lid is made, for example, in a manner disclosed in Fig. 2a by assembling a protecting cover 22 to protect the lid 12 of the actual nozzle. The protecting cover 22 is spaced by the ribs 26 apart from the actual nozzle lid 12, for example, by 4 mm. An air gap 28 remaining between the cover plate 24 of the protecting cover 22 and the lid 12 will be filled in during use by bed material, which functions as insulation between the actual lid 12 of the nozzle and the cover plate 24 of the protecting cover 22.

The protecting cover 22 may be manufactured either by casting, by a hot isostatic pressing (HIP) method or from steel plate or by some other method determined case by case. The protecting cover 22 is connected with the lid 12 of the nozzle piece by welding preferably of three edges in such a way that the side on the blow openings is left open. The open front edge ensures the generation of an insulating bed material layer between the lid and the protecting cover and facilitates the removal of the protecting cover when changing it.

It is, of course, possible to arrange some heat insulation suitable for the purpose to the above mentioned gap 28, if such is necessary. Thereby it is also possible to weld or attach by some other method suitable for the purpose the protecting cover 22 by its all sides to the lid 12 of the nozzle piece.

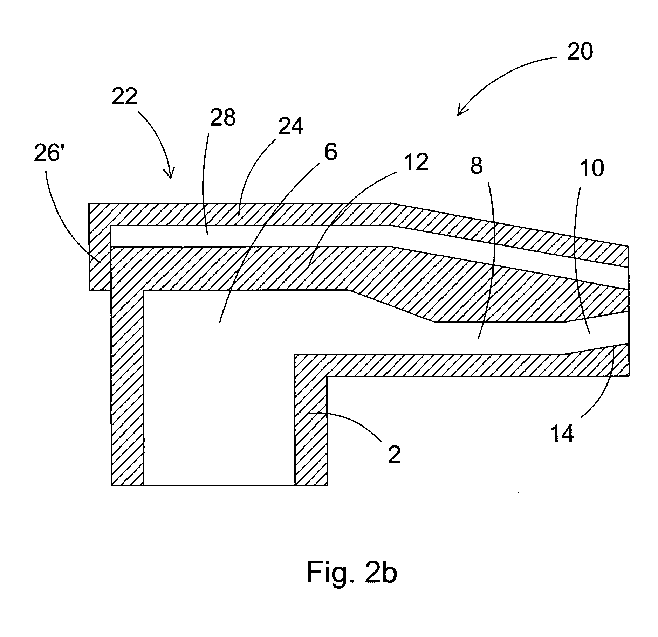

Fig. 2b illustrates another method of manufacturing and attaching the protecting cover. In this embodiment, the protecting cover 22 is arranged to extend outside the actual lid, whereby the the ribs 26' forming an edge of the protecting cover on at least three sides may be higher and extend markedly to the sides of the nozzle to protect the nozzle both against corrsion and erosion. The mounting of these ribs 26' is carried out in the same way as in the example of Fig. 2a, i.e. by welding or in some other manner suitable for the purpose.

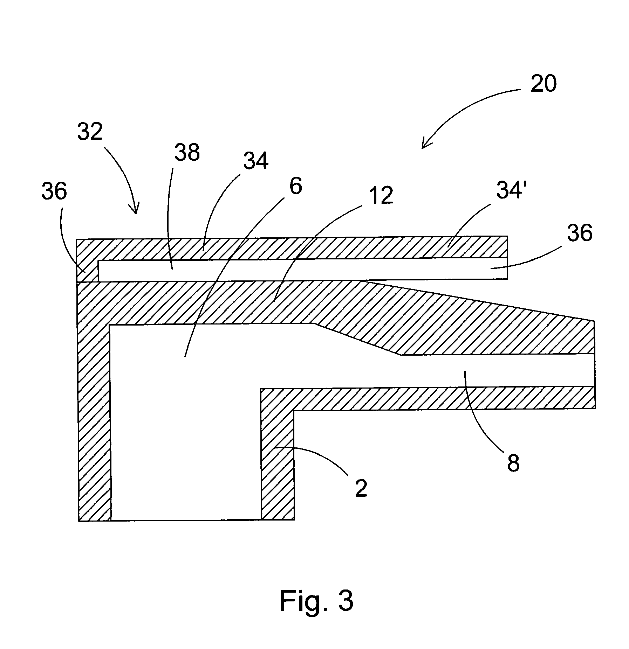

Fig. 3 discloses a nozzle arrangement in accordance with a third embodiment of the invention. There a cover plate 34 of a protecting cover 32 of a nozzle 20 has not been bent in the same way as the cover plate 24 of the protecting cover 22 in Figs. 2a and 2b to follow the shape of the nozzle narrowing towards the blow opening, but the cover plate 34 continues straight above the descending part of the lid 12 of the nozzle as a horizontal shelter 34' leaving between the lid 12 of the nozzle 20 and itself a space widening towards the blow opening for a part of its length, said space filling in at least partially with bed material when in use. Fig. 3 illustrates that the ribs 36 of the protecting cover 32 touch and are thus also attached to the lid 12 of the nozzle only at the substantially horizontal portions, but it is possible as well to arrange, when so desired, that the connecting ribs 36 of the protecting cover 32 vary in thickness on the sides of the protecting cover 32, whereby the ribs 36 may be welded to the lid 12 of the nozzle also in the descending portion of the nozzle lid.

Fig. 3 also illustrates another arrangement for the blow opening of the nozzle, or rather for the nozzle channel leading to the blow opening from the nozzle chamber. Deviating from the previous drawings, the nozzle channel is formed of the whole length of a substantially horizontal channel portion 8 without any structural changes affecting the direction of the blow flow or the turbulence. An advantage of a flat bottom of the channel portion 8 in accordance with Fig. 3 is also that the fluidizing gas exiting/discharging through the nozzle owing to such a bottom effectively empties the channel portion 8 and the nozzle chamber 6 of solid material possibly accidentally entered therein. This nozzle channel shape may naturally be used with the protecting covers in accordance with Figs. 2a and 2b, too.

It is also possible that the upper surface of the lid 12 is of the whole length horizontal and the nozzle channel 8 either slightly ascending of the whole length or substantially horizontal. Thereby the nozzle channel 8 may also begin from the upper part of the nozzle chamber 6, in other words differing from what is disclosed in Figs. 2a, 2b and 3.

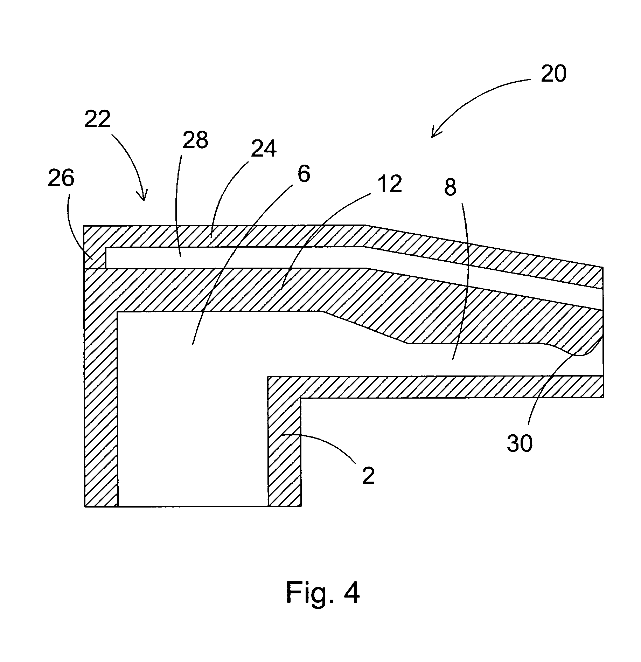

Fig. 4 discloses yet another preferred embodiment of the invention, in which the upper surface of the end of the nozzle channel 8 extending from the nozzle chamber 6 is provided with a bump 30, which preferably extends throughout the whole width of the nozzle channel 8. The bump 30 is preferably of smooth shape and it generates a rising gas flow outside the nozzle, although the bottom of the channel 8 is even. Naturally the above illustrated shape of the nozzle channel is applicable with any kind of protecting cover.

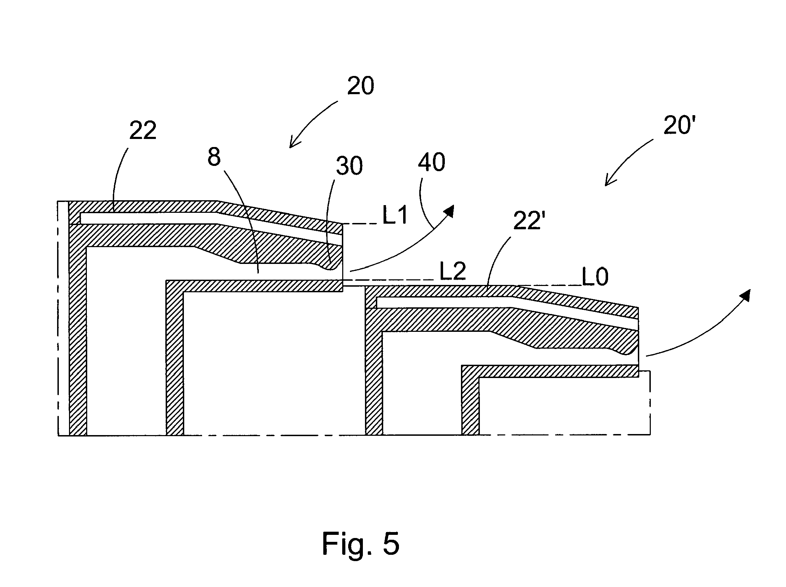

A portion of a bottom grid of a fluidized bed reactor is illustrated in Fig. 5, which is provided with grid nozzles 20 in accordance with one embodiment of the invention. As it is schematically illustrated in Fig. 5, subsequent grid nozzles are arranged in a step-like manner, so that they direct fluidizing gas above the ceiling portion of the subsequent nozzle. By means of such a stepped grid it is possible to effectively direct coarse material at the bottom of the fluidized bed reactor towards a discharge opening for bottom material at the lowest part of the grid.

In order not to have too great pressure differences caused by the fluidized bed effecting in different parts of the grid, the height L1-L0 of the steps in the stepped grid must be kept considerably small. The protecting covers 22 in accordance with the present invention increase the height of the horizontal part of the nozzles 20 and thus the height of the steps of the grid. Thus, the protecting covers 22 increase the need for maintaining the difference L2-L0 between the height level L2 of the bottom of the nozzle channel 8 and the height level L0 of the protecting cover 22' of the next nozzle as small as possible.

If the nozzle channel 8 is made in accordance with Fig. 3 and it directs the gas jet substantially horizontally, there is a risk that the gas jet cools the upper surface of the protecting cover 22' of the next nozzle 20' so that, for example, the corrosive effect of the alkali metal salts contained in the fluidized bed on the surface of the protecting cover 22' increases. Therefore, it is advantageous to direct the gas jet 40 from the nozzle in an upwards inclined direction, whereby the cooling of the protecting cover 22' decreases. The upwardly inclined direction of the gas jet is preferably performed in accordance with Fig. 4 by providing a smooth bump 30 to the upper surface of the nozzle channel 8.

The primary advantage achieved by the two-piece lid is the decrease of the corrosion of the nozzle lid and thus improved operational reliability. The two-piece lid facilitates also maintenance operations, because with the conventional nozzle construction the whole damaged nozzle had to be replaced, but with the two-piece lid only the replacement of the protecting cover is sufficient. Removal of a nozzle is time-consuming and the use of a two-piece lids decreases the shutdown time of the plant in the grid maintenance operations. A third advantage of the two-piece lid is low costs of the protecting cover compared with a complete nozzle. The price is a significant factor in repairing the grid, but it affects in the assembly stage, too, and the price of the two-piece lid remaining low, it being assembled in the new plants does not yet significantly increase the price of the whole grid.

The manufacture of a nozzle provided with the two-piece lid is performed either at the works or on site. The protecting cover is welded to the lid of the nozzle by short fillet welds. The purpose of the welds is to keep the protecting cover in place and no strict mechanical or physical features are required of them. The dimensions of the welds are determined according to the situation in question, but the length of the welds should be minimized. Short welds facilitate the replacement of the protecting cover operating as a wearing piece, because opening of the welds is carried out by hand with an angle grinder.

It is possible make the two-piece lid also in such a way that the material of lid of the nozzle or the protecting cover to be attached outside the lid of the nozzle or both materials are chosen in such a way that the heat conductivity thereof is low. Thus, the air flowing through the nozzle cannot cool down the protecting cover of the nozzle so much that the evaporation of harmful compounds from the lid would be prevented. Especially, when the materials of the lid and/or the protecting cover of the nozzle are chosen in such a way, there is no need to space the lid and the protecting cover of the nozzle apart, but they can be, either completely or partially, touching each other. One of the materials suitable for this purpose is, for example, different ceramics.

Grid nozzles in accordance with the invention have been tested and the test results are very promising. The conventional nozzles at the plant used for the tests were heavily worn out only after a few months' use. The durability of the nozzles provided with a two-piece lid proved good in the test area of thirty nozzles, which was in test use for 13 months. After the test period, there were no significant signs of corrosion or erosion damages in the lids.

As it can be seen from what was disclosed above, a new kind of a grid nozzle has been developed to eliminate or minimize the disadvantages of the prior art to such an extent that it in practice completely eliminates the complicated and time-consuming replacement of grid nozzles. It is, however, to be understood that the invention is not limited to the disclosed embodiments, but is intended to cover various combinations or modifications of its features and several other applications included within the scope of the invention as defined in the appended claims.

## Claims

1. A grid nozzle of a fluidized bed gasifier or combustor, being formed of a nozzle piece attached to a nozzle tube or forming one entity with said nozzle tube, which nozzle piece comprises a nozzle chamber (6) and a horizontally extending nozzle channel (8, 10) ending to a blow opening of said nozzle, said nozzle chamber and nozzle channel being limited from above by a lid (12), **characterized in that** a protecting cover (22, 32) is attached outside the lid (12), said protecting cover (22, 32) being arranged for minimizing the cooling of the outer surface of the nozzle piece due to a fluidizing gas blown through the nozzle into the fluidized bed gasifier or combustor.

2. Grid nozzle in accordance with claim 1, **characterized in that** said protecting cover (22, 32) is attached spaced apart from the lid (12).

3. Grid nozzle in accordance with one of the preceding claims, **characterized in that** said protecting cover (22, 32) comprises a cover plate (24, 34) and ribs (26, 26', 36) arranged at least to the periphery thereof.

4. Grid nozzle in accordance with one of the preceding claims, **characterized in that** said protecting cover (22, 32) is attached to the lid (12) by means of ribs (26, 26', 36) at least at the periphery of the protecting cover (22, 32).

5. Grid nozzle in accordance with one of the preceding claims, **characterized in that** heat insulation is arranged between the lid (12) and the protecting cover (22, 32).

6. Grid nozzle in accordance with one of the preceding claims, **characterized in that** the protecting cover (22, 32) is attached to the lid (12) at all sides but the one on the blow opening side of the nozzle.

7. Grid nozzle in accordance with claim 3 or 4, **characterized in that** the protecting cover (22, 32) is attached to the lid (12) by ribs (26') extending to the side surfaces of said lid.

8. Grid nozzle in accordance with one of the preceding claims, **characterized in that** means are arranged at the blow opening end of the nozzle channel (8) for forming a rising gas flow to the front of the blow opening.

9. Grid nozzle in accordance with one of the preceding claims, **characterized in that** a smooth bump (30) located on the upper surface of the nozzle channel (8) and extending substantially throughout the whole width thereof has been arranged at the blow opening end of the nozzle channel (8) for forming a rising gas flow in the front of the blow opening.

10. Grid nozzle in accordance with one of the preceding claims, **characterized in that** the protecting cover (22, 32) is of the same material with the lid (12).

11. Grid nozzle in accordance with one of the preceding claims, **characterized in that** the protecting cover (22, 32) is attached by welding to the lid (12) or to the sides of the lid.

12. Grid nozzle in accordance with one of the preceding claims, **characterized in that** the protecting cover (22,32) is ceramic.

## Patentansprüche

1. Rostdüse eines Wirbelschichtvergasers oder einer Wirbelschichtfeuerung, die von einem Düsenstück ausgebildet wird, das an einem Düsenrohr befestigt ist, oder eine Einheit mit besagtem Düsenrohr bildet, welches Düsenstück eine Düsenkammer (6) und einen horizontal verlaufenden Düsenkanal (8, 10) umfasst, der in einer Austrittsöffnung besagter Düse endet, wobei Düsenkammer und Düsenkanal oben von einem Deckel (12) begrenzt werden, **dadurch gekennzeichnet, dass** eine Schutzabdeckung (22, 32) auf der Außenseite des Deckels (12) angebracht ist, welche Schutzabdeckung (22, 32) zur Minimierung der Auskühlung der Außenfläche des Düsenstücks infolge eines Fluidisierungsgases vorgesehen ist, das durch die Düse in den Wirbelschichtvergaser oder in die Wirbelschichtfeuerung eingeblasen wird.

2. Rostdüse nach Patentanspruch 1, **dadurch gekennzeichnet, dass** besagte Schutzabdeckung (22, 32) mit Abstand zum Deckel (12) befestigt ist.

3. Rostdüse nach einem der vorhergehenden Patentansprüche, **dadurch gekennzeichnet, dass** die Schutzabdeckung (22, 32) eine Deckplatte (24, 34) und Rippen (26, 26', 36) umfasst, die zumindest an ihrem Umfang angeordnet sind.

4. Rostdüse nach einem der vorhergehenden Patentansprüche, **dadurch gekennzeichnet, dass** die Schutzabdeckung (22, 32) am Deckel (12) mittels Rippen (26, 26', 36) zumindest am Umfang der Schutzabdeckung (22, 32) befestigt ist.

5. Rostdüse nach einem der vorhergehenden Patentansprüche, **dadurch gekennzeichnet, dass** zwischen Deckel (12) und Schutzabdeckung (22, 32) eine Wärmedämmung angeordnet ist.

6. Rostdüse nach einem der vorhergehenden Patentansprüche, **dadurch gekennzeichnet, dass** die Schutzabdeckung (22, 32) am Deckel (12) auf allen Seiten bis auf die eine auf der Austrittsöffnung der Düse angebracht ist.

7. Rostdüse nach Patentanspruch 3 oder 4, **dadurch gekennzeichnet, dass** die Schutzabdeckung (22, 32) am Deckel (12) mittels Rippen (26') befestigt ist, die sich bis an die Seitenflächen besagten Deckels erstrecken.

8. Rostdüse nach einem der vorhergehenden Patentansprüche, **dadurch gekennzeichnet, dass** Mittel am Ende der Austrittsöffnung des Düsenkanals (8) vorgesehen sind zur Ausbildung einer ansteigenden Gasströmung bis vor die Austrittsöffnung.

9. Rostdüse nach einem der vorhergehenden Patentansprüche, **dadurch gekennzeichnet, dass** eine leichte Erhebung (30), die an der oberen Fläche des Düsenkanals (8) positioniert ist und sich hauptsächlich durch dessen gesamte Breite hindurch erstreckt, am Ende der Austrittsöffnung des Düsenkanals (8) angeordnet ist, um eine ansteigende Strömung vor der Austrittsöffnung zu bilden.

10. Rostdüse nach einem der vorhergehenden Patentansprüche, **dadurch gekennzeichnet, dass** die Schutzabdeckung (22, 32) aus dem selben Material ist wie der Deckel (12).

11. Rostdüse nach einem der vorhergehenden Patentansprüche, **dadurch gekennzeichnet, dass** die Schutzabdeckung (22, 32) am Deckel (12) oder an den Seiten des Deckels angeschweißt ist.

12. Rostdüse nach einem der vorhergehenden Patentansprüche, **dadurch gekennzeichnet, dass** die Schutzabdeckung (22, 32) keramisch ist.

## Revendications

1. Buse à grille d'un gazéificateur ou d'un brûleur à lit fluidisé, ladite buse étant formée d'une pièce de buse fixée sur un tube de buse ou formant une entité avec ledit tube de buse, laquelle pièce de buse comprend une chambre de buse (6) et un conduit de buse (8, 10) extensible horizontalement qui se termine par une ouverture de soufflage de ladite buse, ladite chambre de buse et ledit conduit de buse étant limités en haut par un couvercle (12), **caractérisé en ce qu'**un capot de protection (22, 32) est fixé à l'extérieur du couvercle (12), ledit capot de protection (22, 32) étant adapté pour minimiser le refroidissement de la surface extérieure de la pièce de buse dû à un gaz de fluidisation soufflé à travers la buse dans le gazéificateur ou le brûleur à lit fluidisé.

2. Buse à grille selon la revendication 1, **caractérisée en ce que** ledit capot de protection (22, 32) est fixé à distance du couvercle (12).

3. Buse à grille selon l'une des revendications précédentes, **caractérisée en ce que** le capot de protection (22, 32) comprend une plaque de capot (24, 34) et des nervures (26, 26', 36) disposées au moins à la périphérie dudit capot de protection.

4. Buse à grille selon l'une des revendications précédentes, **caractérisée en ce que** ledit capot de protection (22, 32) est fixé au couvercle (12) au moyen de nervures (26, 26', 36) au moins à la périphérie du capot de protection (22, 32).

5. buse à grille selon l'une des revendications précédente, **caractérisé en ce qu'**une isolation thermique est disposée entre le couvercle (12) et le capot de protection (22, 32).

6. Buse à grille selon l'une des revendications précédentes, **caractérisée en ce que** le capot de protection (22, 32) est fixé au couvercle (12) sur tous les côtés sauf du côté ouverture latérale de soufflage de la buse.

7. Buse à grille selon la revendication 3 ou 4, **caractérisée en ce que** le capot de protection (22, 32) est fixé au couvercle (12) par des nervures (26') s'étendant vers les surfaces latérales dudit couvercle.

8. Buse à grille selon l'une des revendications précédentes, **caractérisée en ce que** des moyens sont disposés à l'extrémité d'ouverture de soufflage du conduit de buse (8) pour former un flux de gaz ascendant vers l'avant de l'ouverture de soufflage.

9. Buse à grille selon l'une des revendications précédentes, **caractérisée en ce qu'**une bosse lisse (30) située sur la surface supérieure du conduit de buse (8) et s'étendant sensiblement sur toute la largeur de celui-ci a été disposée à l'extrémité d'ouverture de soufflage du conduit de buse (8) pour former un flux de gaz ascendant vers l'avant de l'ouverture de soufflage.

10. Buse à grille selon l'une des revendications précédentes, caractérisée en que le capot de protection (22, 32) est en la même matière que le couvercle (12).

11. Buse à grille selon l'une des revendications précédente, **caractérisée en ce que** le capot de protection (22, 32) est fixé par soudage au couvercle (12) ou aux côtés du couvercle.

12. Buse à grille selon l'une des revendications précédentes, **caractérisée en ce que** le couvercle de protection (22,32) est en céramique.
